(19) Europäisches Patentamt / European Patent Office / Office européen des brevets

(11) **EP 3 932 985 A1**

(12) **EUROPEAN PATENT APPLICATION**
published in accordance with Art. 153(4) EPC


(43) Date of publication:
**05.01.2022 Bulletin 2022/01**

(21) Application number: **19917224.8**

(22) Date of filing: **24.12.2019**

(51) Int Cl.:
***C08L 9/02*** *(2006.01)* ***C08L 61/04*** *(2006.01)*
***C08K 3/36*** *(2006.01)* ***F16L 11/04*** *(2006.01)*

(86) International application number:
**PCT/JP2019/050634**

(87) International publication number:
**WO 2020/174857 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2019 JP 2019032957**



(71) Applicant: **The Yokohama Rubber Co., Ltd.**
**Tokyo 105-8685 (JP)**

(72) Inventor: **TOGO, Mari**
**Hiratsuka-chi, Kanagawa 254-8601 (JP)**

(74) Representative: **Grünecker Patent- und Rechtsanwälte**
**PartG mbB**
**Leopoldstraße 4**
**80802 München (DE)**


(54) **RUBBER COMPOSITION FOR MARINE HOSE AND MARINE HOSE USING SAME**


(57) The present invention is to provide a rubber composition for a marine hose that can provide oil resistance and product lifetime in a well-balanced manner to a high degree, and a marine hose. The present invention is a rubber composition for a marine hose, the rubber composition containing an acrylonitrile-butadiene copolymer having an acrylonitrile content from 40 to 45 mass%, silica, a phenol resin that is represented by formula below and that is liquid under conditions of 25°C (where R is each independently an aliphatic hydrocarbon group that may have an unsaturated bond, and n is from 1 to 3), and a methylene donor, a content of the phenol resin being from 1 to 9 parts by mass per 100 parts by mass of the acrylonitrile-butadiene copolymer; and a marine hose formed by using the rubber composition for a marine hose.


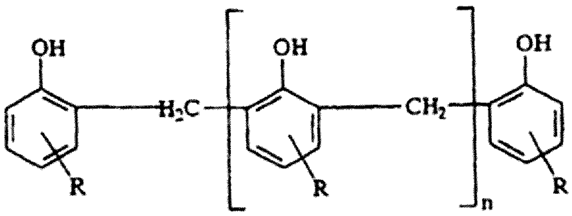

EP 3 932 985 A1

## Description

### Technical Field

The present invention relates to a rubber composition for a marine hose and a marine hose using the same.

### Background Art

A marine hose is a hose used for, for example, transporting liquid fuel such as crude oil from a crude oil supplying facility in the sea to an offshore tanker, from an offshore tanker to a land-based plant, or from a tanker to a tanker.
In general, the form of a marine hose includes a form having a hose body and ferrules each provided on each end of the hose body.
Since a marine hose transports liquid fuel as described above, examples of the performance required for a marine hose include oil resistance of an innermost layer (tube rubber) of the marine hose.
For example, as a rubber composition that can be used for a marine hose, Patent Document 1 has been proposed.
Patent Document 1 describes a rubber composition containing a sulfur vulcanizable rubber component, a resorcin donor, a methylene donor, and a basic compounding agent, and the rubber component contains acrylonitrile-butadiene rubber.
Meanwhile, Patent Document 2 describes a vulcanizable rubber composition containing (I) 100 parts by weight of a rubber component selected from the group consisting of natural rubber, synthetic rubber, and a combination of these; (II) from 0.5 to 15 parts by weight of a methylene donor compound that forms formaldehyde when heated; and (III) from 1 to 25 parts by weight of a methylene acceptor component containing a blend of a phenol novolac resin and a resorcinol novolac resin represented by the following formula;

the phenol novolac resin being represented by Formula (1);
and
the resorcinol novolac resin being represented by Formula (2);
the phenol novolac resin of Formula (1) above containing methylene bonding having at least 40% of ortho-ortho bonding. Note that Formula (1) and Formula (2) in Patent Document 2 are omitted.

### Citation List

### Patent Literature

Patent Document 1: JP 2013-245224 A

Patent Document 2: JP 4861008 B

### Summary of Invention

### Technical Problem

Meanwhile, elongation of product lifetime of marine hoses has been demanded by the market. The inventor of the present invention found that the length of the product lifetime of a marine hose correlates with elongation at break of the rubber.
In such circumstances, when the inventor of the present invention prepared rubber compositions using Patent Documents 1 and 2 as references and evaluated them, the inventor found that it is difficult for such rubber compositions to achieve oil resistance and elongation at break in a well-balanced manner to a high degree.
In detail, the inventor of the present invention found that, in the case where a rubber composition for a marine hose contains an acrylonitrile-butadiene copolymer (NBR) having a high acrylonitrile amount as the rubber component to enhance the oil resistance, the elongation at break tends to be low.
The inventor of the present invention also found that, in the case where the amount of sulfur or the like contained in the rubber composition is reduced to enhance the elongation at break of the rubber, the oil resistance is reduced by more than a little.
As described above, it was found that the oil resistance and the elongation at break, i.e., product lifetime, are

in a trade-off relationship, and it is difficult to provide the oil resistance and the elongation at break in a compatible manner.

Therefore, an object of the present invention is to provide a rubber composition for a marine hose that can provide oil resistance and product lifetime in a well-balanced manner to a high degree, and a marine hose.

Solution to Problem

As a result of diligent research to solve the problem described above, the inventor of the present invention found that a desired effect can be obtained by a rubber composition containing an acrylonitrile-butadiene copolymer having an acrylonitrile content in a particular range, silica, a phenol resin that is represented by a particular formula and that is liquid under conditions of 25°C, and a methylene donor, a content of the phenol resin being in a particular range, and thus completed the present invention.

An embodiment of the present invention is based on the findings described above, and specifically solves the problems described above by the following configurations.

[1] A rubber composition for a marine hose, the rubber composition containing:

an acrylonitrile-butadiene copolymer having an acrylonitrile content from 40 to 45 mass%,
silica,
a phenol resin that is represented by Formula (I) below and that is liquid under a condition of 25°C, and
a methylene donor,
a content of the phenol resin being from 1 to 9 parts by mass per 100 parts by mass of the acrylonitrile-butadiene copolymer.

[Chem 1]

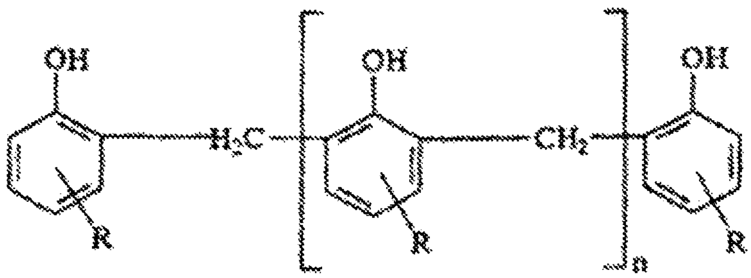

(I)

In Formula (I), R is each independently an aliphatic hydrocarbon group that may have an unsaturated bond, and n is from 1 to 3.

[2] The rubber composition for a marine hose according to [1], where a content of the methylene donor is from 0.1 to 1 part by mass per 100 parts by mass of the acrylonitrile-butadiene copolymer.

[3] The rubber composition for a marine hose according to [1] or [2], where, in Formula (I), the number of carbons of the aliphatic hydrocarbon group that may have an unsaturated bond as R is from 2 to 20.

[4] The rubber composition for a marine hose according to any one of [1] to [3], where, in Formula (I), R is each independently a saturated aliphatic hydrocarbon group or an aliphatic hydrocarbon group having an unsaturated bond.

[5] The rubber composition for a marine hose according to any one of [1] to [4], where, as R in Formula (I), the phenol resin contains a saturated aliphatic hydrocarbon group and an aliphatic hydrocarbon group having an unsaturated bond.

[6] The rubber composition for a marine hose according to any one of [1] to [5], where a mass ratio of a content of the phenol resin to a content of the methylene donor (phenol resin/methylene donor) is from 2.0 to 20.

[7] A marine hose formed by using the rubber composition for a marine hose according to any one of [1] to [6].

[8] The marine hose according to [7] having an innermost layer formed by using the rubber composition for a marine hose.

Advantageous Effects of Invention

According to an embodiment of the present invention, a rubber composition for a marine hose that can provide oil resistance and product lifetime in a well-balanced manner to a high degree can be provided.
Furthermore, according to an embodiment of the present invention, a marine hose that can provide oil resistance and product lifetime in a well-balanced manner to a high degree can be provided.

Description of Embodiments

Embodiments of the present invention will be described in detail below.
Note that in the present specification, numerical ranges indicated using "(from) ... to ..." include the former number as the lower limit value and the latter number as the upper limit value.
Furthermore, in the present specification, unless otherwise noted, a substance corresponding to each component can be used alone or in combination of two or more types thereof. In a case where a component includes two or more types of substances, content of component means the total content of the two or more types of substances.
Furthermore, in the present specification, the production method of each component is not particularly limited unless otherwise noted. Examples of the method include a known method.
Furthermore, in the present specification, the case where at least one of oil resistance and product lifetime is superior may be referred to as "exhibiting superior effect of the present invention".

Rubber composition for marine hose

The rubber composition for a marine hose according to an embodiment of the present invention (composition according to an embodiment of the present invention) is
a rubber composition for a marine hose, the rubber composition containing:

an acrylonitrile-butadiene copolymer having an acrylonitrile content from 40 to 45 mass%,
silica,
a phenol resin that is represented by Formula (I) below and that is liquid under conditions of 25°C, and
a methylene donor,
a content of the phenol resin being from 1 to 9 parts by mass per 100 parts by mass of the acrylonitrile-butadiene copolymer.

[Chem 2]

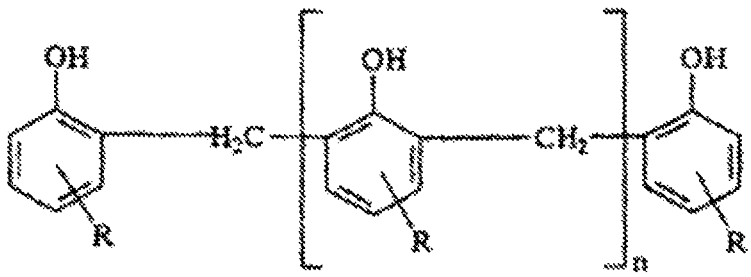

(I)

In Formula (I), R is each independently an aliphatic hydrocarbon group that may have an unsaturated bond, and n is from 1 to 3.
Note that, in the present specification, the acrylonitrile-butadiene copolymer having an acrylonitrile content from 40 to 45 mass% may be referred to as "particular NBR",

the phenol resin that is represented by Formula (I) above and that is liquid under conditions of 25°C may be referred to as "particular phenol resin", and
the acrylonitrile content may be referred to as "AN amount".

The composition according to an embodiment of the present invention is thought to achieve desired effects as a result of having such a configuration. Although the reason is not clear, it is assumed to be as follows.

That is, in the case where the amount of the nitrile group having a polarity is great, i.e., the AN amount is great, in NBR, affinity between such an NBR and an oil that is a non-polar molecule is typically reduced.

Therefore, the composition according to an embodiment of the present invention containing the particular NBR having a significantly high AN amount achieves excellent oil resistance.

Meanwhile, as described above, due to the large AN amount of the NBR, it is conceived that the elongation at break (i.e., product lifetime; the same applies hereinafter) tends to be reduced.

However, it is presumed that, in an embodiment of the present invention, because the particular phenol resin is liquid under conditions of 25°C, miscibility between the particular phenol resin and the particular NBR is excellent, and thus the elongation at break can be improved.

Furthermore, in an embodiment of the present invention, the inventor of the present invention found that the particular phenol resin does not impair excellent oil resistance exhibited by the particular NBR.

Furthermore, it is presumed that, in the case where the number of carbons of the aliphatic hydrocarbon group that may have an unsaturated bond (R in Formula (I)) contained in the particular phenol resin is in an appropriate range (e.g., 2 to 20), the miscibility between the particular phenol resin and the particular NBR, which is a polymer, as described above becomes even better, and thus the elongation at break is even more improved.

Furthermore, it is conceived that, in the case where the particular phenol resin contains an aliphatic hydrocarbon group having an unsaturated bond as R in Formula (I), the elongation at break can be even more improved.

It is presumed that this is because, in the case where the aliphatic hydrocarbon group as R has an unsaturated bond, the miscibility between the particular phenol resin and the particular NBR, which is diene rubber, as described above becomes even better, and thus the elongation at break is even more improved.

It is presumed that, in the case where the aliphatic hydrocarbon group as R has an unsaturated bond, crosslinking between the particular phenol resin and the particular NBR, which is diene rubber, as described above becomes possible, and as a result, the particular phenol resin or a reaction product of the particular phenol resin and the methylene donor as described above are incorporated into the particular NBR network, and thus the elongation at break is even more improved.

Each of the components included in the composition according to an embodiment of the present invention will be described in detail below.

Acrylonitrile-butadiene copolymer

The composition according to an embodiment of the present invention contains the acrylonitrile-butadiene copolymer (particular NBR) having an acrylonitrile content from 40 to 45 mass%.

An acrylonitrile-butadiene copolymer is a copolymer of acrylonitrile and butadiene. The acrylonitrile-butadiene copolymer may be a hydrogenated product thereof.

In the present specification, the acrylonitrile-butadiene copolymer may be abbreviated as "NBR".

Acrylonitrile amount

In an embodiment of the present invention, the acrylonitrile amount of the particular NBR is from 40 to 45 mass% relative to the total amount of the particular NBR.

By setting the acrylonitrile amount to the range described above, the composition according to an embodiment of the present invention achieves excellent oil resistance.

The acrylonitrile amount is preferably from 43 to 45 mass% relative to the total amount of the particular NBR from the perspective of exhibiting superior effect of the present invention.

The acrylonitrile amount (bonded acrylonitrile amount) in the acrylonitrile-butadiene copolymer can be measured by the Kjeldahl method in accordance with JIS K 6451-2: 2016.

Mooney viscosity

The Mooney viscosity of the particular NBR is preferably from 45 to 85, and more preferably from 45 to 60, from the perspective of exhibiting superior effect of the present invention and excellent adhesiveness.

In an embodiment of the present invention, the Mooney viscosity of the acrylonitrile-butadiene rubber can be measured under conditions of 100°C in accordance with JIS K 6300-1: 2013.

Molecular weight distribution

The molecular weight distribution of the acrylonitrile-butadiene copolymer (Mw/Mn: weight average molecular weight/number average molecular weight) is preferably from 3.5 to 6.0, and more preferably from 5.0 to 6.0, from the

perspective of exhibiting superior effect of the present invention and excellent adhesiveness.

In an embodiment of the present invention, the weight average molecular weight, number average molecular weight, and molecular weight distribution of the acrylonitrile-butadiene copolymer can be determined based on the value measured by gel permeation chromatography (GPC), based on calibration with polystyrene standard using tetrahydrofuran as a solvent.

• Other rubbers

The composition according to an embodiment of the present invention can further contain a rubber component other than the particular NBR as rubber, in addition to the particular NBR.

Examples of the rubber component include diene rubber such as NBR other than the particular NBR described above, natural rubber (NR), isoprene rubber (IR), butadiene rubber (BR), 1,2-butadiene rubber, styrene-butadiene rubber (SBR), chloroprene rubber (CR), butyl rubber (IIR), and ethylenepropylene-diene rubber (EPDM).

• Content of particular NBR

The content of the particular NBR is preferably from 80 to 100 mass%, and more preferably 100 mass%, relative to the total amount of the rubber component from the perspective of exhibiting superior effect of the present invention.

Silica

The silica contained in the composition according to an embodiment of the present invention is not particularly limited. Examples of the silica include a known silica.

The silica is preferably acidic silica from the perspectives of exhibiting superior effect of the present invention, being capable of enhancing crosslinking rate of the particular phenol resin, and suppressing excessive increase of the vulcanization rate (crosslinking density) of the particular NBR.

The pH of the acidic silica is not particularly limited as long as the pH is lower than 7.

In an embodiment of the present invention, the pH of silica can be measured in accordance with JIS K5101-17-2: 2004.

Silica content

The content of the silica is preferably from 20 to 40 parts by mass, more preferably from 20 to 30 parts by mass, and even more preferably from 23 to 28 parts by mass, per 100 parts by mass of the particular NBR, from the perspective of exhibiting superior effect of the present invention, excellent reinforcing property and adhesiveness, and excellent balance of reinforcing property, adhesiveness, and processability.

Phenol resin that is represented by Formula (I) and that is liquid under conditions of 25°C

The composition according to an embodiment of the present invention contains a phenol resin that is represented by Formula (I) below and that is liquid under conditions of 25°C (particular phenol resin).

[Chem 3]

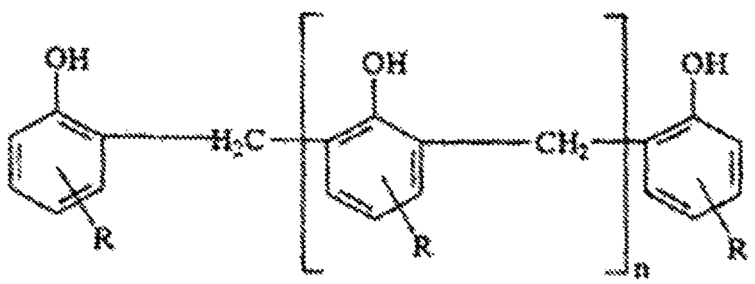

(I)

In Formula (I), R is each independently an aliphatic hydrocarbon group that may have an unsaturated bond, and n is from 1 to 3.

In an embodiment of the present invention, the particular phenol resin can function as a methylene acceptor.

Liquid under conditions of 25°C

The particular phenol resin is liquid under conditions of 25°C.

Because the particular phenol resin is liquid under conditions of 25°C, the particular phenol resin can function as a plasticizer of the particular NBR.

The viscosity under conditions of 25°C of the particular phenol resin can be, for example, from 50 to 30000 mPa·s.

The viscosity of the particular phenol resin under conditions of 25°C can be measured by using a type B viscometer.

Formula (I)

In Formula (I), R is each independently an aliphatic hydrocarbon group that may have an unsaturated bond, and n is from 1 to 3.

R

• Number of carbon of R

In Formula (I), the number of carbons of the aliphatic hydrocarbon group that may have an unsaturated bond as R is preferably from 2 to 20, and more preferably from 13 to 17, from the perspective of exhibiting superior effect of the present invention.

• Type of R

In Formula (I), R is preferably each independently a saturated aliphatic hydrocarbon group or an aliphatic hydrocarbon group having an unsaturated bond from the perspective of exhibiting superior effect of the present invention.

The number of unsaturated bonds that can be contained in one R can be from 0 to 4.

Examples of the unsaturated bond include a double bond.

The particular phenol resin preferably contains a saturated aliphatic hydrocarbon group and an aliphatic hydrocarbon group having an unsaturated bond as R in Formula (I) from the perspective of exhibiting superior effect of the present invention.

In the case where the particular phenol resin contains a saturated aliphatic hydrocarbon group and an aliphatic hydrocarbon group having an unsaturated bond as R in Formula (I), the content of the saturated aliphatic hydrocarbon group is preferably 98 mass% or less, more preferably from 0 to 50 mass%, even more preferably from 0 to 8 mass%, and particularly preferably more than 0 mass% and 5 mass% or less, relative to the total amount of R contained in the particular phenol resin from the perspective of exhibiting superior effect of the present invention.

In the case where the particular phenol resin contains a saturated aliphatic hydrocarbon group and an aliphatic hydrocarbon group having an unsaturated bond as R in Formula (I), the content of the aliphatic hydrocarbon group having a plurality of unsaturated bonds in one R is preferably 50 mass% or more, and more preferably from 55 to 80 mass%, relative to the total amount of R contained in the particular phenol resin from the perspective of exhibiting superior effect of the present invention.

In the case where the particular phenol resin contains the saturated aliphatic hydrocarbon group, the aliphatic hydrocarbon group having one unsaturated bond in one R, and the aliphatic hydrocarbon group having a plurality of unsaturated bonds in one R as R in Formula (I), the content of the aliphatic hydrocarbon group having one unsaturated bond in one R can be an amount obtained by subtracting the content of the saturated aliphatic hydrocarbon group and the content of the aliphatic hydrocarbon group having a plurality of unsaturated bonds in one R from the total amount of R contained in the particular phenol resin.

The particular phenol resin preferably contains $-C_{15}H_{31}$, $-(CH_2)_7CH=CH(CH_2)_5CH_3$, $-(CH_2)_7CH=CHCH_2CH=CH(CH_2)_2CH_3$, and $-(CH_2)_7CH=CHCH_2CH=CHCH_2CH=CH_2$ as R in Formula (I) from the perspective of exhibiting superior effect of the present invention.

• Position of R

In Formula (I), the position of each R is preferably at the m-position relative to the OH-group on each benzene ring from the perspective of exhibiting superior effect of the present invention.

n

In Formula (I), n is from 1 to 3.

Phenol resin derived from cardanol

The particular phenol resin is preferably a phenol resin derived from cardanol from the perspective of exhibiting superior effect of the present invention.

• Cardanol

Cardanol can be obtained by subjecting a cashew nut shell liquid to fractional distillation. Cardanol is a mixture of four types having various numbers or positions of unsaturated groups and may contain cardol, anacardic acid, and alkyl cardol as impurities.

Cardanol can be represented by Formula (1) below. Note that, although four types of substituents can be possible as R in Formula (1), in the present specification, a mixture of compounds having the following four types of substituents is referred to as cardanol.

[Chem 4]

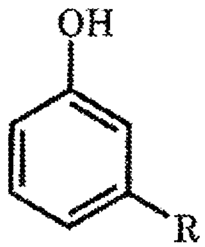

$R = -C_{15}H_{31}$

$-(CH_2)_7CH{=}CH(CH_2)_5CH_3$

$-(CH_2)_7CH{=}CHCH_2CH{=}CH(CH_2)_2CH_3$

$-(CH_2)_7CH{=}CHCH_2CH{=}CHCH_2CH{=}CH_2$

(1)

• Aldehydes

The aldehydes used when producing the phenol resin derived from cardanol is not particularly limited. Examples thereof include formaldehyde.

Content of particular phenol resin

In an embodiment of the present invention, the content of the particular phenol resin is from 1 to 9 parts by mass per 100 parts by mass of the acrylonitrile-butadiene copolymer.

The content of the particular phenol resin is preferably from 1.5 to 7.5 parts by mass, more preferably from 2.0 to 6.0 parts by mass, and even more preferably from 2.5 to 5.0 parts by mass, per 100 parts by mass of the acrylonitrile-butadiene copolymer, from the perspective of exhibiting superior effect of the present invention.

Methylene donor

The methylene donor contained in the composition according to an embodiment of the present inventions is not particularly limited as long as the methylene donor is a compound that can donate a methylene group to the particular phenol resin.

Examples of the methylene donor contained in the composition according to an embodiment of the present invention include paraformaldehyde, hexamethylenetetramine, hexaethoxymethylmelamine, hexamethoxymethylmelamine, lauryloxymethylpyridinium chloride, ethoxymethylpyridinium chloride, trioxane hexamethoxymethylmelamine polymers of formaldehyde, hexakis(methoxymethyl)melamine, N,N',N"-trimethyl/N,N',N"-trimethylolmelamine, hexamethylolmelamine, partial condensation products of hexamethylolmelamine pentamethyl ether, N-methylolmelamine, N,N'-dimethylolmelamine, N,N',N"-tris(methoxymethyl)melamine, and N,N',N"-tributyl-N,N',N"-trimethylol-melamine.

Among these, hexamethylenetetramine is preferred from the perspective of exhibiting superior effect of the present invention.

Content of methylene donor

The content of the methylene donor is preferably from 0.1 to 1 part by mass, and more preferably from 0.20 to 0.8 parts by mass, per 100 parts by mass of the acrylonitrile-butadiene copolymer (particular NBR) from the perspective of exhibiting superior effect of the present invention.

Mass ratio of particular phenol resin/methylene donor

The mass ratio of the content of the particular phenol resin to the content of the methylene donor (particular phenol resin/methylene donor) is preferably from 2.0 to 20, and more preferably from 3.0 to 12.0, from the perspective of exhibiting superior effect of the present invention.

Sulfur

The composition according to an embodiment of the present invention preferably further contains sulfur from the perspective of exhibiting superior effect of the present invention and excellent adhesiveness.
The sulfur is not particularly limited. Examples of the sulfur include a known sulfur.

• Content of sulfur

The content of the sulfur is preferably from 1 to 3 parts by mass, and more preferably from 1 to 2 parts by mass, per 100 parts by mass of the particular NBR from the perspective of exhibiting superior effect of the present invention and excellent adhesiveness.

Additives

The composition according to an embodiment of the present invention can further contain additives such as phenol-based resins other than the particular phenol resin, plasticizers other than the particular phenol resin, anti-aging agents, antioxidants, antistatic agents, flame retardants, vulcanizing agents other than sulfur, vulcanization accelerators, adhesion aids, vulcanization retarders, and fillers other than silica, unless such an additive impairs the object of the present invention.
There are no particular restrictions to the method of producing the composition according to an embodiment of the present invention, and an example is the method whereby each of the above-mentioned components is mixed using a publicly known method and device (such as a Banbury mixer, kneader, or roll).
The mixing temperature during production of the composition according to an embodiment of the present invention is, for example, preferably from 50 to 120°C.
The composition according to an embodiment of the present invention can be vulcanized under publicly known vulcanizing conditions.

For marine hose

The composition according to an embodiment of the present invention is a rubber composition for a marine hose.
A marine hose can be formed by using the composition according to an embodiment of the present invention.
In the marine hose, constituent members using the composition according to an embodiment of the present invention are not particularly limited.
In particular, from the perspective of achieving excellent oil resistance of the composition according to an embodiment of the present invention and high elongation at break, an example of a preferable aspect is one in which an innermost layer of the marine hose is formed from the composition according to an embodiment of the present invention.
As a method of producing the marine hose formed from the composition according to an embodiment of the present invention, for example, first, a sheet of the composition according to an embodiment of the present invention is wound around a mandrel. A method of winding the sheet of the composition according to an embodiment of the present invention around the mandrel is not particularly limited, and examples thereof include a method of winding the sheet (e.g., spirally) while the sheets are partially overlapped Next, on the sheet of the composition according to an embodiment of the present invention, for example, at least one selected from the group consisting of a resin layer, a reinforcing layer, an intermediate rubber layer, a buoyant material layer, and an outermost layer (e.g., cover rubber layer) can be layered. Each layer described above is not particularly limited. Examples thereof include a known layer. Furthermore, for each layer described above, for example, materials or arrangement in the marine hose are not particularly limited.
The marine hose in which the innermost layer is formed from the composition according to an embodiment of

the present invention can be produced by, for example, vulcanizing the multilayer structure obtained as described above.

Since the marine hose is generally large, an example of a preferable aspect is one in which for example when the multilayer structure is vulcanized, at an initial stage, the multilayer structure is heated for from 1 to 1.5 hours at a temperature in a range of, for example, from 100 to 110°C, and thereafter, the multilayer structure is heated under conditions of from 130 to 147°C to complete vulcanization and the like.

Marine hose

The marine hose according to an embodiment of the present invention is a marine hose formed by using the rubber composition according to an embodiment of the present invention.

The rubber composition used in the marine hose according to an embodiment of the present invention is not particularly limited as long as it is the rubber composition of an embodiment of the present invention.

The marine hose according to an embodiment of the present invention is not particularly limited as long as the marine hose is formed by using the rubber composition described above.

Innermost layer

An example of a preferable aspect is one in which the marine hose according to an embodiment of the present invention has an innermost layer formed by using the rubber composition described above.

In the case where the innermost layer is formed by using the rubber composition according to an embodiment of the present invention, the thickness of the innermost layer can be, for example, from 1.5 to 8.0 mm.

The marine hose according to an embodiment of the present invention can further have at least one selected from the group consisting of a reinforcing layer, an intermediate rubber layer, an outermost layer, a resin layer, and a buoyant material layer in addition to the innermost layer. The marine hose according to an embodiment of the present invention may have the reinforcing layer in a form of a single layer or multiple layers. The same applies to the intermediate rubber layer.

The marine hose according to an embodiment of the present invention can have, for example, the innermost layer, the reinforcing layer, and the outermost layer in the order described above.

The marine hose according to an embodiment of the present invention can further have an intermediate rubber layer in between the innermost layer and the reinforcing layer or in between the reinforcing layer and the outermost layer.

In the case where the marine hose according to an embodiment of the present invention have multiple reinforcing layers, the marine hose can further have an intermediate rubber layer in between a reinforcing layer and a reinforcing layer. In the case where the marine hose according to an embodiment of the present invention has multiple reinforcing layers and can have an intermediate rubber layer in between a reinforcing layer and a reinforcing layer, an example of the form of the marine hose is innermost layer/[intermediate rubber layer/reinforcing layer]$_n$/intermediate rubber layer/outermost layer. In the form described above, the marine hose can have n layers of [intermediate rubber layer/reinforcing layer]. For example, n can be from 2 to 10. [Intermediate rubber layer/reinforcing layer] means, for example, a multilayer structure of an intermediate rubber layer and a reinforcing layer or a structure in which the intermediate rubber layer is provided in advance on a reinforcing layer as a coating rubber.

Reinforcing layer

The reinforcing layer that can be further included in the marine hose according to an embodiment of the present invention is not particularly limited.

Examples of the material of the reinforcing layer include metals and fiber materials (e.g., polyamide and polyester).

The reinforcing layer may be a surface-treated reinforcing layer. Furthermore, the reinforcing layer may be, for example, a reinforcing layer in which an intermediate rubber layer is provided in advance on a reinforcing layer as a coating rubber.

Examples of the form of the reinforcing layer include those braided into a spiral structure and/or a braid structure, woven fabric (e.g., canvas), and nonwoven fabric.

The thickness of the reinforcing layer (e.g., a single layered reinforcing layer) (or the thickness of a reinforcing layer in which a coating rubber is provided in advance) can be, for example, from 0.5 to 1.5 mm.

Intermediate rubber layer

The intermediate rubber layer that can be further included in the marine hose according to an embodiment of the present invention is not particularly limited.

Examples of rubber contained in the intermediate rubber layer include natural rubber and/or synthetic rubber.
The thickness of the intermediate rubber layer can be, for example, from 2.0 to 8.0 mm.
In the case where the intermediate rubber layer is formed with a reinforcing layer to which a coating rubber is provided in advance on one side or both side, the thickness of the intermediate rubber layer on the reinforcing layer (excluding coating rubber layer) can be, for example, 0.5 mm or more.

Outermost layer

The outermost layer that can be further included in the marine hose according to an embodiment of the present invention is not particularly limited.
The outermost layer can be, for example, a rubber layer.
Examples of the rubber contained in the outermost layer include natural rubber and/or synthetic rubber.
The thickness of the outermost layer can be, for example, from 2.0 to 10.0 mm.

Marine hose

An inner diameter of the marine hose according to an embodiment of the present invention is not particularly limited. For example, the inner diameter can be from 10 to 30 inches.
A length of the marine hose according to an embodiment of the present invention is not particularly limited. For example, the length can be from 5 to 20 meters.

Examples

An embodiment of the present invention will be described below in detail by way of examples. However, an embodiment of the present invention is not limited to such examples.

Production of composition

The components shown in Table 1 below were blended in compositions (part by mass) shown in the same table.
Specifically, first, of the components shown in Table 1 below, components other than sulfur, a vulcanization accelerator, and a methylene donor were mixed in a 1.5 liter sealed mixer for 5 minutes under conditions of 100°C, and thus a master batch was obtained. Next, the sulfur, the vulcanization accelerator, and the methylene donor were added to the obtained master batch in the amounts shown in Table 1 below, and these were mixed with an open roll under conditions of 50°C, and thus a composition was obtained.

Evaluation

The following evaluations were performed using the composition produced as described below. The results are shown in Table 1.

Preparation of initial test piece

Using a 148°C press molding machine, each composition obtained as described above was vulcanized for 60 minutes under a surface pressure of 3.0 MPa, and thus a vulcanized sheet having a thickness of 2 mm was produced.
In accordance with JIS K 6251:2017, a JIS standard No. 3 dumbbell was punched from the vulcanized sheet, and thus an initial test piece was produced.

Product lifetime

In an embodiment of the present invention, the product lifetime of the marine hose was evaluated in terms of elongation at break of the vulcanized rubber.

• Measurement of elongation at break

Using each initial test piece obtained as described above, a tensile test was performed in accordance with JIS K 6251:2017 under conditions of room temperature at a tensile speed of 500 mm/min, and the elongation at break (EB) [%] was measured.

• Evaluation criteria of product lifetime

In an embodiment of the present invention, when EB was 600% or higher, the product lifetime of the marine hose was evaluated as being long.
A higher EB that was higher than 600% was evaluated as having a longer product lifetime of the marine hose.
When the EB was lower than 600%, the product lifetime of the marine hose was evaluated as being short.

Oil resistance

• Immersion test

An immersion test in which the initial test piece obtained as described above was immersed in a mixed liquid of toluene/isooctane = 60/40 (mass ratio) under conditions of room temperature for 168 hours, and a test piece after the immersion test was obtained.

• Measurement of tensile strength at break (TB)

Using the initial test piece, a tensile test was performed in accordance with JIS K 6251:2017 under conditions of room temperature at a tensile speed of 500 mm/min, and the initial tensile strength at break [MPa] was measured.
Furthermore, a tensile test was performed in a manner identical to that described above using a test piece after the immersion test, and the tensile strength at break after the immersion test [MPa] was measured.

• Calculation of percentage of reduction in tensile strength at break (TB)

The initial tensile strength at break and the tensile strength at break after the immersion test measured as described above were applied to the following equation, and the percentage of reduction in the tensile strength at break before and after the immersion test was calculated.

Percentage of change in tensile strength at break (%) = [(tensile strength at break after immersion test - initial tensile strength at break)/initial tensile strength at break] × 100

• Evaluation criteria of oil resistance

The evaluation criteria of oil resistance are as follows.
In an embodiment of the present invention, the case where the absolute value of the percentage of change described above was from 0 to 30% was evaluated as having excellent oil resistance.
When the absolute value of the percentage of change was from 0 to 30%, the case where an absolute value was closer to 0% was evaluated as having superior oil resistance.
The case where the absolute value of the percentage of change was higher than 30% was evaluated as having poor oil resistance.

[Table 1-1]

| Table 1 | Comparative Example 1 | Comparative Example 2 | Comparative Example 3 |
|---|---|---|---|
| Particular NBR 1 (AN amount: 45%) | | 100 | 100 |
| Comparative NBR (AN amount: 33%) | 100 | | |
| FT carbon black | 85 | 85 | 85 |
| Silica | 25 | 25 | 25 |
| Plasticizer (DINP) | 15 | 15 | 15 |

(continued)

| Table 1 | | Comparative Example 1 | Comparative Example 2 | Comparative Example 3 |
|---|---|---|---|---|
| Anti-aging agent | | 1 | 1 | 1 |
| Vulcanization retarder | | 0.5 | 0.5 | 0.5 |
| Zinc oxide | | 5 | 5 | 5 |
| | Stearic acid | 2 | 2 | 2 |
| | Vulcanization accelerator (CZ) | 1.25 | 1.25 | 1.25 |
| | Methylene donor | 1 | 1 | 1 |
| | Sulfur | 1.5 | 1.5 | 1.5 |
| Methylene acceptor | (Comparative) Resorcinol | | 2.5 | |
| | (Comparative) Cresol-formaldehyde resin | | | 2.5 |
| | (Comparative) Cashew-modified phenolic resin | | | |
| | Particular phenol resin 1 (cardanol-derived) | 2.5 | | |
| Methylene acceptor/methylene donor (mass ratio) | | 2.5 | 2.5 | 2.5 |
| Oil resistance toluene/isooctane = 60/40 at RT × 168 h | ΔTB (%) | -35 | -25.5 | -31.4 |
| Product lifetime | EB (%) | 600 | 541 | 576 |

[Table 1-2]

| | Table 1 | Comparative Example 4 | Comparative Example 5 | Example 1 | Example 2 |
|---|---|---|---|---|---|
| | Particular NBR 1 (AN amount: 45%) | 100 | 100 | 100 | 100 |
| | Comparative NBR (AN amount: 33%) | | | | |
| | FT carbon black | 85 | 85 | 85 | 85 |
| | Silica | 25 | 25 | 25 | 25 |
| | Plasticizer (DINP) | 15 | 15 | 15 | 15 |
| | Anti-aging agent | 1 | 1 | 1 | 1 |
| | Vulcanization retarder | 0.5 | 0.5 | 0.5 | 0.5 |
| | Zinc oxide | 5 | 5 | 5 | 5 |
| | Stearic acid | 2 | 2 | 2 | 2 |
| | Vulcanization accelerator (CZ) | 1.25 | 1.25 | 1.25 | 1.25 |
| | Methylene donor | 1 | 1 | 0.13 | 0.25 |
| | Sulfur | 1.5 | 1.5 | 1.5 | 1.5 |
| Methylene acceptor | (Comparative) Resorcinol | | | | |
| | (Comparative) Cresol-formaldehyde resin | | | | |
| | (Comparative) Cashew-modified phenolic resin | 2.5 | | | |
| | Particular phenol resin 1 (cardanol-derived) | | 0 | 2.5 | 2.5 |
| Methylene acceptor/methylene donor (mass ratio) | | 2.5 | 0.0 | 19.2 | 10.0 |
| Oil resistance toluene/ isooctane = 60/40 at RT × 168 h | ΔTB (%) | -29.6 | -28.9 | -28.4 | -20.9 |
| Product lifetime | EB (%) | 509 | 564 | 665 | 716 |

[Table 1-3]

| Table 1 | Example 3 | Example 4 | Example 5 | Comparative Example 6 |
|---|---|---|---|---|
| Particular NBR 1 (AN amount: 45%) | 100 | 100 | 100 | 100 |
| Comparative NBR (AN amount: 33%) | | | | |
| FT carbon black | 85 | 85 | 85 | 85 |
| Silica | 25 | 25 | 25 | 25 |

(continued)

| Table 1 | | Example 3 | Example 4 | Example 5 | Comparative Example 6 |
|---|---|---|---|---|---|
| | Plasticizer (DINP) | 15 | 15 | 15 | 15 |
| | Anti-aging agent | 1 | 1 | 1 | 1 |
| | Vulcanization retarder | 0.5 | 0.5 | 0.5 | 0.5 |
| | Zinc oxide | 5 | 5 | 5 | 5 |
| | Stearic acid | 2 | 2 | 2 | 2 |
| | Vulcanization accelerator (CZ) | 1.25 | 1.25 | 1.25 | 1.25 |
| | Methylene donor | 0.5 | 1 | 1 | 1 |
| | Sulfur | 1.5 | 1.5 | 1.5 | 1.5 |
| Methylene acceptor | (Comparative) Resorcinol | | | | |
| | (Comparative) Cresol-formaldehyde resin | | | | |
| | (Comparative) Cashew-modified phenolic resin | | | | |
| | Particular phenol resin 1 (cardanol-derive d) | 2.5 | 2.5 | 5 | 10 |
| Methylene acceptor/methylene donor (mass ratio) | | 5.0 | 2.5 | 5.0 | 10.0 |
| Oil resistance toluene/ isooctane = 60/40 at RT × 168 h | ΔTB (%) | -21.4 | -25 | -29.8 | -35.5 |
| Product lifetime | EB (%) | 715 | 619 | 689 | 709 |

Details of each component indicated in Table 1 are as follows.

- Particular NBR 1 (AN amount: 45%): Nipol DN005 (AN amount: 45 mass%; Mooney viscosity: 50; molecular weight distribution Mw/Mn: 5.4; available from Zeon Corporation)
- Comparative NBR (AN amount: 33%): Nipol 1042 (AN amount: 33 mass%; Mooney viscosity: 78; molecular weight distribution Mw/Mn: 4.1; available from Zeon Corporation)
- FT carbon black: FT carbon black (Asahi Thermal, available from Asahi Carbon Co., Ltd.); nitrogen adsorption specific surface area: 24 $m^2/g$; dibutyl phthalate oil absorption: 28 mL/100 g
- Silica (acidic): $SiO_2$ (pH: 6.4; Nipsil AQ, available from Tosoh Silica Corporation), acidic silica
- Plasticizer (DINP): diisononyl phthalate
- Anti-aging agent: 2,2,4-trimethyl-1,2-dihydroquinoline polymer. Trade name: NOCRAC 224, available from Ouchi Shinko Chemical Industrial Co., Ltd.
- Vulcanization retarder: N-(cyclohexylthio)phthalimide. Trade name: SANTOGARD PVI DS Powder, available from FLEXSYS
- Zinc oxide (vulcanization aid): Zinc oxide III (available from Seido Chemical Industry Co., Ltd.)
- Stearic acid (vulcanization aid): Beads stearic acid (available from NOF Corporation)
- Vulcanization accelerator (CZ): N-cyclohexyl-2-benzothiazolyl sulfenamide (NOCCELER CZ, available from Ouchi Shinko Chemical Industrial Co., Ltd.)
- Methylene donor: hexamethylenetetramine NOCCELER H, available from Ouchi Shinko Chemical Industrial Co., Ltd.
- Sulfur: powdered sulfur (available from Hosoi Chemical Industry Co., Ltd.)

Methylene acceptor

- (Comparative) Resorcinol: available from Sumitomo Chemical Co., Ltd. The following structure

[Chem 5]

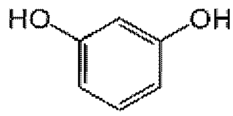

- (Comparative) Cresol-formaldehyde resin: Sumikanol 610 (available from Sumitomo Chemical Co., Ltd.; the following structure) In the following formula, n is 16 or 17.

[Chem 6]

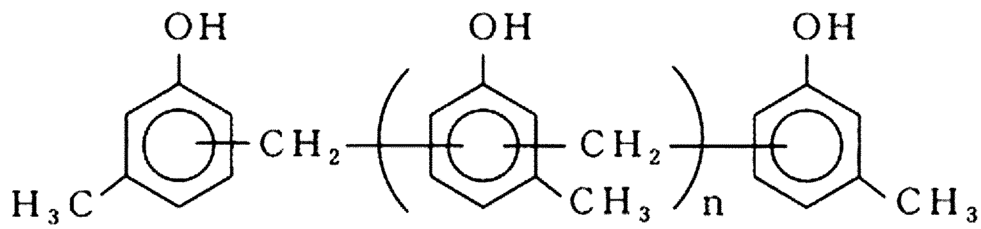

- (Comparative) Cashew-modified phenolic resin: SUMILITERESIN PR-NR-1, available from Sumitomo Bakelite Co., Ltd. (the following structure); Mw = 6690, Mn = 1689. In the following formula, n is a value corresponding to the weight average molecular weight or the number average molecular weight, and thus n is more than 3. Furthermore, for the (Comparative) cashew-modified phenolic resin, in Formula (I) above, a repeating unit shown in parentheses does not have R, and phenol at one end does not have R.

[Chem 7]

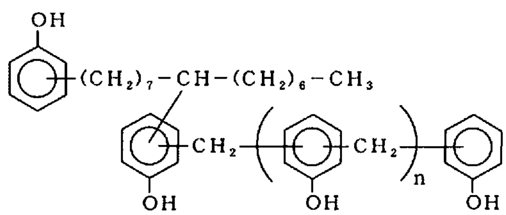

- Particular phenol resin 1 (cardanol-derived): a compound that is derived from cardanol and that is represented by the following structure. Trade name: CD-5L, available from Tohoku Chemical Industries, Ltd. The particular phenol resin 1 is liquid under conditions of 25°C. The viscosity under conditions of 25°C of the particular phenol resin 1 is 25000 mPa·s.

[Chem 8]

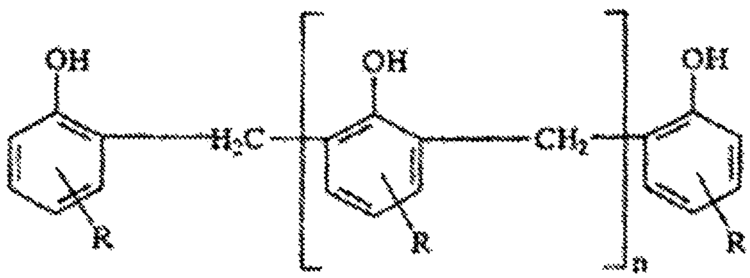

In the structural formula above, the position of each R is at the m-position relative to the OH-group on each benzene ring. The particular phenol resin 1 is a mixture of phenol resins having n of 1 to 3, where R is represented as follows.

R = $-C_{15}H_{31}$ (approximately 5%)
$-(CH_2)_7CH=CH(CH_2)_5CH_3$ (approximately 35%)
$-(CH_2)_7CH=CHCH_2CH=CH(CH_2)_2CH_3$ (approximately 20%)
$-(CH_2)_7CH=CHCH_2CH=CHCH_2CH=CH_2$ (approximately 40%)

The number of percentage of each R is a content of R in terms of mass% relative to the total amount of R contained in the particular phenol resin.

As can be seen from the results shown in Table 1, Comparative Example 1, which contained no particular NBR but contained a comparative NBR having an AN amount that was lower than the predetermined range, exhibited low oil resistance.

Comparative Example 2, which contained no particular phenol resin but contained resorcinol, was evaluated as having a short product lifetime.

Comparative Example 3, which contained no particular phenol resin but contained a cresol-formaldehyde resin having n in Formula (I) above that was not within the predetermined range, was evaluated as having low oil resistance and a short product lifetime.

Comparative Example 4, which contained no particular phenol resin but contained a cashew-modified phenol resin in which the repeating unit represented in the parentheses in Formula (I) above did not have R, the phenol at one end did not have R, and n was not within the predetermined range, was evaluated as having a short product lifetime.

Comparative Example 5, which contained no particular phenol resin, was evaluated as having a short product lifetime.

Comparative Example 6, in which the content of the particular phenol resin was more than the predetermined range, exhibited low oil resistance.

In contrast, the compositions according to embodiments of the present invention achieved excellent oil resistance and high elongation at break, and thus provided the oil resistance and the product lifetime in a well-balanced manner to a high degree.

## Claims

1. A rubber composition for a marine hose, the rubber composition comprising:

   an acrylonitrile-butadiene copolymer having an acrylonitrile content from 40 to 45 mass%,
   silica,
   a phenol resin that is represented by Formula (I) below and that is liquid under a condition of 25°C, and
   a methylene donor,
   a content of the phenol resin being from 1 to 9 parts by mass per 100 parts by mass of the acrylonitrile-butadiene copolymer;

   [Chem 1]

   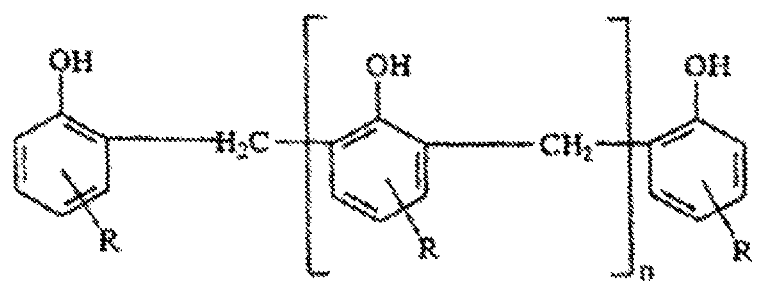

   (I)

   where R is each independently an aliphatic hydrocarbon group that may have an unsaturated bond, and n is from 1 to 3.

2. The rubber composition for a marine hose according to claim 1, wherein a content of the methylene donor is from 0.1 to 1 part by mass per 100 parts by mass of the acrylonitrile-butadiene copolymer.

3. The rubber composition for a marine hose according to claim 1 or 2, wherein, in Formula (I), the number of carbons

of the aliphatic hydrocarbon group that may have an unsaturated bond as R is from 2 to 20.

**4.** The rubber composition for a marine hose according to any one of claims 1 to 3, wherein, in Formula (I), R is each independently a saturated aliphatic hydrocarbon group or an aliphatic hydrocarbon group having an unsaturated bond.

**5.** The rubber composition for a marine hose according to any one of claims 1 to 4, wherein, as R in Formula (I), the phenol resin contains a saturated aliphatic hydrocarbon group and an aliphatic hydrocarbon group having an unsaturated bond.

**6.** The rubber composition for a marine hose according to any one of claims 1 to 5, wherein a mass ratio of a content of the phenol resin to a content of the methylene donor (phenol resin/methylene donor) is from 2.0 to 20.

**7.** A marine hose formed by using the rubber composition for a marine hose according to any one of claims 1 to 6.

**8.** The marine hose according to claim 7, comprising an innermost layer formed by using the rubber composition for a marine hose.

## INTERNATIONAL SEARCH REPORT

International application No.
PCT/JP2019/050634

A. CLASSIFICATION OF SUBJECT MATTER
C08L 9/02(2006.01)i; C08L 61/04(2006.01)i; C08K 3/36(2006.01)i; F16L 11/04(2006.01)i
FI: C08L9/02; C08L61/04; C08K3/36; F16L11/04
According to International Patent Classification (IPC) or to both national classification and IPC

B. FIELDS SEARCHED
Minimum documentation searched (classification system followed by classification symbols)
C08L1/00-101/14; C08K3/00-13/08; F16L11/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | WO 2016/084734 A1 (NIPPON ZEON CO., LTD.) 02.06.2016 (2016-06-02) | 1-8 |
| A | JP 2013-227480 A (TOKAI RUBBER INDUSTRIES, LTD.) 07.11.2013 (2013-11-07) | 1-8 |
| A | JP 2018-165303 A (GUNEI CHEMICAL INDUSTRY CO., LTD.) 25.10.2018 (2018-10-25) | 1-8 |
| A | JP 2016-222870 A (THE YOKOHAMA RUBBER CO., LTD.) 28.12.2016 (2016-12-28) | 1-8 |
| A | JP 2013-245224 A (THE YOKOHAMA RUBBER CO., LTD.) 09.12.2013 (2013-12-09) | 1-8 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 March 2020 (13.03.2020) | 24 March 2020 (24.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/050634

| Patent Documents referred in the Report | Publication Date | Patent Family | Publication Date |
|---|---|---|---|
| WO 2016/084734 A1 | 02 Jun. 2016 | US 2017/0327672 A1<br>EP 3225658 A1<br>KR 10-2017-0089874 A<br>CN 107001715 A | |
| JP 2013-227480 A | 07 Nov. 2013 | (Family: none) | |
| JP 2018-165303 A | 25 Oct. 2018 | (Family: none) | |
| JP 2016-222870 A | 28 Dec. 2016 | (Family: none) | |
| JP 2013-245224 A | 09 Dec. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013245224 A
- JP 4861008 B